# EUROPÄISCHE PATENTANMELDUNG

(11) **EP 3 982 518 A1**
(43) Veröffentlichungstag der Anmeldung: **13.04.2022**
(21) Anmeldenummer: 20200236.6
(22) Anmeldetag: 06.10.2020
(51) Int. Cl.: H02K 5/22, H02K 7/14, F04D 25/06

(54) **IMPELLER UND VERFAHREN ZUM MONTIEREN EINES IMPELLERS**

(71) Anmelder: mdGroup Germany GmbH, 57072 Siegen (DE)
(72) Erfinder: Schübeler Daniel, 33129 Delbrück (DE)
(74) Vertreter: Glawe, Delfs, Moll

(57) **Zusammenfassung**

Impeller mit einem Impellergehäuse (15) und einem Motorgehäuse (19), wobei das Motorgehäuse (19) in einem Innenraum des Impellergehäuses (15) angeordnet ist. Ein Stator (20) bildet eine Verbindung zwischen dem Impellergehäuse (15) und dem Motorgehäuse (19). Ein Kabel (26, 30) erstreckt sich zwischen dem Impellergehäuse (15) und dem Motorgehäuse (19). Der Stator (20) umfasst einen Statorkörper (34) und einen Deckel (35). Das Kabel (26, 30) ist in einem Hohlraum (32) geführt ist, der zwischen dem Statorkörper (34) und dem Deckel (35) angeordnet ist. Die Erfindung betrifft außerdem ein Verfahren zum Montieren eines Impellers.

## Beschreibung

Die Erfindung betrifft einen Impeller mit einem Impellergehäuse und einem Motorgehäuse. Das Motorgehäuse ist in einem Innenraum des Impellergehäuses angeordnet. Ein Stator bildet eine Verbindung zwischen dem Impellergehäuse und dem Motorgehäuse. Die Erfindung betrifft außerdem ein Verfahren zum Montieren eines Impellers.

Mit Impellern wird eine Luftströmung erzeugt, die sich entlang eines zwischen dem Impellergehäuse und dem Motorgehäuse eingeschlossenen Ringraums erstreckt. Um einen in dem Motorgehäuse angeordneten Motor mit elektrischer Energie zu versorgen oder um Sensordaten von dem Motor nach außen zu übertragen, sind Kabel erforderlich, die von dem Motorgehäuse radial nach außen geführt sind. Die Kabel kreuzen den Ringraum, in dem die Luftströmung geführt ist. Es stellt sich das Problem, die Kabel so zu führen, dass die Luftströmung nicht beeinträchtigt wird.

Es ist bekannt, im Inneren des Stators einen Kanal auszubilden, innerhalb dessen das Kabel geführt ist. Dies hat zur Folge, dass ein hoher Aufwand bei der Montage des Impellers anfällt. Parallel zum Einsetzen des Motors muss das Kabel in den Kanal eingefädelt werden und in Längsrichtung durch den Kanal hindurchgeführt werden.

Der Erfindung liegt die Aufgabe zugrunde, einen Impeller und ein Verfahren zum Montieren eines Impellers vorzustellen, bei denen der Montageaufwand reduziert ist. Ausgehend vom genannten Stand der Technik wird die Aufgabe gelöst mit den Merkmalen der unabhängigen Ansprüche. Vorteilhafte Ausführungsformen sind in den Unteransprüchen angegeben.

Bei dem erfindungsgemäßen Impeller erstreckt sich ein Kabel zwischen dem Impellergehäuse und dem Motorgehäuse. Der Stator umfasst einen Statorkörper und einen Deckel. Das Kabel ist in einem Hohlraum geführt, der zwischen dem Statorkörper und dem Deckel angeordnet ist.

Die Erfindung hat erkannt, dass auf diese Weise eine wesentlich erleichterte Montage des Impellers möglich wird. Beim Einsetzen des Motors in das Motorgehäuse wird das Kabel so gelegt, dass es sich entlang des Stators durch den Ringraum erstreckt. Mit dem Aufsetzen des Deckels wird der freie Zugang zu dem Kabelkanal abgedeckt, so dass das Kabel in einem Hohlraum angeordnet ist.

Im fertig montierten Zustand des Impellers kann im Inneren des Motorgehäuses ein elektrisch angetriebener Motor angeordnet sein. Der Motor kann eine Motorwelle antreiben, die sich in Axialrichtung des Impellers erstreckt. An die Motorwelle kann ein Rotor angeschlossen sein, der mit der Motorwelle in Drehung versetzt wird. Der Rotor kann Rotorblätter umfassen, die sich im Wesentlichen in Radialrichtung nach außen erstrecken. Die Rotorblätter können so angeordnet und dimensioniert sein, dass sie den radialen Abschnitt überstreichen, der von dem Ringraum zwischen dem Impellergehäuse und dem Motorgehäuse aufgespannt wird.

Der Rotor kann in einem stromaufwärts gelegenen Abschnitt des Ringraums angeordnet sein, so dass der mit dem Rotor angetriebene Luftstrom zuerst den Rotor und dann den längeren Abschnitt des Ringraums passiert. Das stromaufwärts gelegene Ende des Impellers wird als vorderes Ende bezeichnet, das stromabwärts gelegene Ende des Impellers wird als hinteres Ende bezeichnet. Das Impellergehäuse kann eine geschlossene Hülle bilden, die sich in Umfangsrichtung um den Ringraum herum erstreckt. Ein stromaufwärts angeordneter Abschnitt des Impellergehäuses kann radial außerhalb des Rotors angeordnet sein.

Der Impeller kann eine Mehrzahl von Statoren umfassen, die sich zwischen dem Impellergehäuse und dem Motorgehäuse erstrecken. Die Mehrzahl von Statoren kann in derselben axialen Position angeordnet sein. Die Positionen der Statoren können bezogen auf den Umfang des Impellers gleichverteilt sein. Es können beispielsweise drei Statoren über den Umfang des Impellers verteilt sein. Die Statoren können ein Tragflächenprofil aufweisen, um die mit dem Rotor erzeugte Luftströmung zu leiten und gleichzurichten.

Der Ringraum kann eine axiale Ausdehnung haben, die sich von der Ebene des Rotors bis zu einem stromabwärts gelegenen Ende des Impellergehäuses erstreckt. Die Statoren können mit ihrem hinteren Ende nach hinten über das Impellergehäuse hinaus nach hinten ragen. Ein vorderer Abschnitt des Stators kann im Innenraum des Impellergehäuses angeordnet sein. Der Hohlraum, innerhalb dessen sich das Kabel erstreckt, kann im Innenraum des Impellergehäuses angeordnet sein. Der Hohlraum kann durch das Impellergehäuse hindurch nach außen offen sein. Der Hohlraum kann durch das Motorgehäuse hindurch nach innen offen sein.

Das in dem Hohlraum geführte Kabel kann ein erstes Ende aufweisen, das radial innerhalb des Motorgehäuses angeordnet ist. Das Kabel kann ein zweites Ende aufweisen, das radial außerhalb des Impellergehäuses angeordnet ist. Zu den Kabeln können Versorgungskabel gehören, über die der Motor des Impellers mit elektrischer Energie versorgt wird. Insbesondere können drei Versorgungskabel vorgesehen sein, die an drei Phasen des Motors angeschlossen sind. Eine Batterie, an die die Versorgungskabel angeschlossen sind, kann radial außerhalb des Impellergehäuses angeordnet sein.

Zu den Kabeln können Sensorkabel gehören, die an in dem Motorgehäuse angeordnete Sensoren angeschlossen sind. Die Sensoren können beispielsweise dazu ausgelegt sein, die Drehzahl des Motors oder die Temperatur zu messen. Die Sensoren können einen Hall-Sensor und/oder eine IMU (Inertial Measurement Unit) umfassen. Über die Sensorkabel können die gewonnenen Messdaten zu einer radial außerhalb des Impellergehäuses angeordneten Steuereinheit geleitet werden.

Das erste Ende des Kabels kann in einem stromabwärts angeordneten Abschnitt des Motors angeschlossen sein, so dass die magnetischen Antriebskomponenten des Motors bezogen auf die Axialrichtung zwischen dem Rotor und dem ersten Ende des Kabels angeordnet sind. Dies kann für alle an den Motor angeschlossenen Kabel gelten.

Der Impeller kann so gestaltet sein, dass ein einzelnes Kabel in dem Hohlraum des Impellers angeordnet ist. Drei Versorgungskabel des Motors können nach außen geführt sein, indem jedes Versorgungskabel in dem Hohlraum eines anderen Impellers angeordnet ist.

Möglich ist auch, dass eine Mehrzahl von Kabeln in dem Hohlraum eines einzelnen Stators geführt ist. Beispielsweise können alle Versorgungskabel des Motors innerhalb eines Stators angeordnet sein, was Vorteile für die elektromagnetische Verträglichkeit bietet. Zusätzliche Sensorkabel können innerhalb desselben Stators oder innerhalb eines anderen Stators geführt sein. Ebenfalls von Vorteil für die elektromagnetische Verträglichkeit ist es, wenn der Stator mit einer die Kabel umgebenden elektromagnetischen Abschirmung ausgestattet ist.

Ein Stator, in dem ein Kabel geführt ist, umfasst einen Statorkörper, über den mechanische Kräfte zwischen dem Impellergehäuse und dem Motorgehäuse übertragen werden, und einen Deckel, mit dem der Hohlraum abgedeckt wird. Der Stator kann so gestaltet sein, dass mechanische Lasten alleine vom Statorkörper getragen werden, während der Deckel nur eine Abdeckfunktion übernimmt. Möglich ist auch, dass der Deckel neben dem Statorkörper eine lasttragende Funktion hat.

In dem Statorkörper kann eine Ausnehmung zum Aufnehmen des Kabels ausgebildet sein. Die Ausnehmung kann sich über die Länge des Statorkörpers von dem Motorgehäuse bis zu dem Impellergehäuse erstrecken. Die Ausnehmung kann im Querschnitt so bemessen sein, dass das Kabel oder die Kabel, die in dem Stator geführt werden, vollständig in der Ausnehmung aufgenommen werden. Es kann dann ein Deckel verwendet werden, der flach auf dem Statorkörper aufliegt, um die Ausnehmung zu verschließen und den Hohlraum zu bilden, in dem die Kabel geführt sind. Möglich ist auch, dass der Hohlraum teilweise oder vollständig innerhalb eines Teils der Kontur des Stators angeordnet ist, der von dem Deckel gebildet wird.

Die Ausnehmung kann zum hinteren Ende des Statorkörpers hin offen sein. Dies ist von Vorteil für eine erleichterte Montage des Impellers, weil beim Einsetzen des Motors in das Motorgehäuse gleichzeitig die Kabel in die Ausnehmungen eingelegt werden können. Die Kabel können mit Klebstoff in der Ausnehmung des Statorkörpers fixiert sein.

Der Deckel kann so gestaltet sein, dass der Hohlraum über die gesamte Länge des Stators zwischen dem Motorgehäuse und dem Impellergehäuse abgedeckt ist. Insbesondere kann der Deckel so gestaltet sein, dass der Hohlraum vollständig abgeschlossen ist, dass also die Kabel in dem Hohlraum von außen nicht sichtbar sind.

Der Deckel kann in einer lösbaren Verbindung mit dem Statorkörper stehen, beispielsweise indem der Deckel mit dem Statorkörper verschraubt ist oder über eine Rastverbindung mit dem Statorkörper verbunden ist. Möglich ist auch eine Verbindung zwischen dem Deckel und dem Statorkörper, die nicht zerstörungsfrei gelöst werden kann, beispielsweise indem der Deckel mit dem Statorkörper verklebt oder verschweißt ist.

Der Statorkörper und der Deckel können gemeinsam eine Kontur des Stators aufspannen, die die Form eines Tragflächenprofils hat. Der Übergang zwischen der Oberfläche des Statorkörpers und der Oberfläche des Deckels kann glatt sein, so dass die Luftströmung möglichst wenig gestört wird.

Der erfindungsgemäße Impeller kann ein Deckel-Bauteil umfassen, in dem der Deckel für einen ersten Statorkörper und der Deckel für einen zweiten Statorkörper zu einem einheitlichen Bauteil zusammengefasst sind. Es muss dann bei der Montage des Impellers lediglich ein einzelnes Teil mit dem Impeller verbunden werden, um bei einer Mehrzahl von Statoren die Kontur zu vervollständigen. Wenn mehrere Statoren Hohlräume mit darin angeordneten Kabeln haben, werden die Hohlräume mit einem einzelnen Montageschritt verschlossen.

Das Deckel-Bauteil kann einen zentralen Abschnitt umfassen, der eine Abdeckung für das stromabwärts gelegene hintere Ende des Motors bildet. Die Oberfläche des Deckel-Bauteils kann einen glatten Übergang zu der Oberfläche des Motorgehäuses bilden, so dass die Luftströmung möglichst wenig gestört wird. Das Deckel-Bauteil kann nach hinten in einer abgerundeten Form auslaufen, deren Scheitel mit der Achse des Impellers zusammenfällt. Das Deckel-Bauteil kann mit einer Eingangsöffnung für einen Kühlluftkanal versehen sein. Die Eingangsöffnung kann insbesondere im zentralen Abschnitt des Deckel-Bauteils angeordnet sein.

Die Erfindung betrifft auch ein Verfahren zum Montieren eines Impellers. Bei dem Verfahren wird ein Motor in ein Motorgehäuse eingesetzt. Ein Kabel wird entlang eines Statorkörpers angeordnet, wobei der Statorkörper das Motorgehäuse mit einem Impellergehäuse verbindet. Ein Deckel wird angebracht, so dass das Kabel in einem Hohlraum zwischen dem Deckel und dem Statorkörper angeordnet ist.

Bei einer bevorzugten Ausführungsform folgt das Anordnen des Kabels in einem gemeinsamen Arbeitsschritt mit dem Einsetzen des Motors. Möglich sind aber auch andere zeitliche Abfolgen der beiden Arbeitsschritte. Das Kabel kann vor dem Aufsetzen des Deckels mit Klebstoff an dem Statorkörper befestigt werden. Nach dem Einsetzen des Motors kann ein Rotor mit dem Motor verbunden werden. Der Rotor kann aus entgegengesetzter Richtung an das Impellergehäuse herangeführt werden wie der Motor.

Das Verfahren kann mit weiteren Schritten fortgebildet werden, die im Zusammenhang des erfindungsgemäßen Impellers beschrieben sind. Der Impeller kann mit weiteren Merkmalen fortgebildet werden, die im Zusammenhang des erfindungsgemäßen Verfahrens beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: eine schematische Darstellung eines erfindungsgemäßen Impellers;
- Fig. 2:: einen erfindungsgemäßen Impeller in einem Zwischenzustand bei der Montage;
- Fig. 3:: den Impeller aus Fig. 2 in fertig montiertem Zustand;
- Fig. 4:: einen Schnitt durch einen Stator eines erfindungsgemäßen Impellers;
- Fig. 5:: die Ansicht aus Fig. 4 bei einer alternativen Ausführungsform der Erfindung.

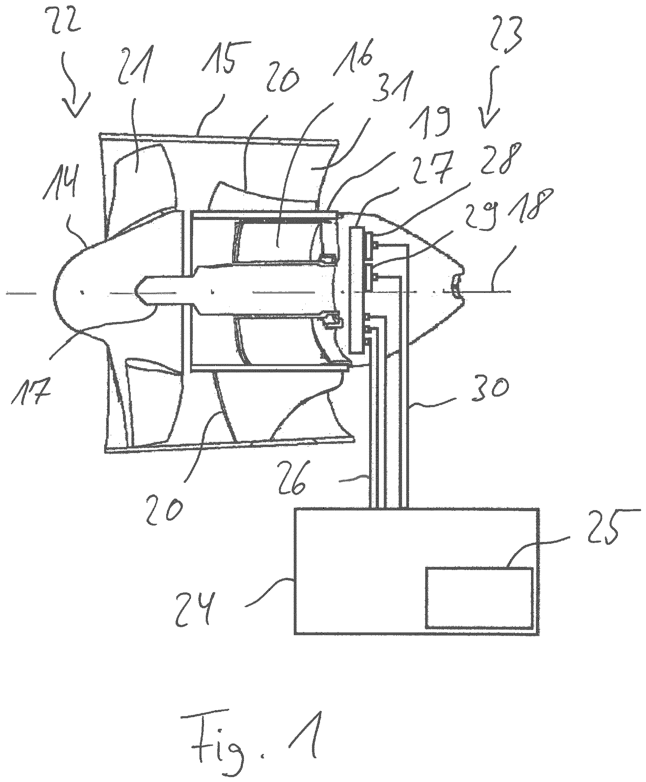

Ein erfindungsgemäßer Impeller umfasst gemäß Fig. 1 einen Rotor 14, der in einem Impellergehäuse 15 angeordnet ist. Ein Elektromotor 16 treibt eine Welle 17 an, so dass der mit der Welle 17 verbundene Rotor 14 in Drehung versetzt wird. Die Welle 17 erstreckt sich entlang einer zentralen Achse 18 des Impellers. Der Motor 16 ist in einem Motorgehäuse 19 gehalten, das im Innenraum des Impellergehäuses 15 angeordnet ist.

In einem Ringraum 31, der radial außerhalb des Motorgehäuses 19 und radial innerhalb des Impellergehäuses 15 eingeschlossen ist, ist eine Mehrzahl von Statoren 20 ausgebildet, mit denen das Motorgehäuse 19 relativ zu dem Impellergehäuse 15 in Position gehalten wird. Der Rotor 14 umfasst eine Mehrzahl von Rotorblättern 21, die am vordern Ende des Ringraums 31 umlaufen. Durch die Drehung des Rotors 14 wird eine Luftströmung erzeugt, die sich ausgehend von dem Rotor 14 durch den Ringraum 31 hindurch bis zum entgegengesetzten Ende des Impellers erstreckt. Der stromaufwärts gelegene Teil wird als vorderes Ende 22, der stromabwärts gelegene Teil als hinteres Ende 23 des Impellers bezeichnet.

Der Impeller wird mit einer Steuereinheit 24 angesteuert. Die Steuereinheit umfasst eine Batterie 25, aus der der Elektromotor 16 mit elektrischer Energie gespeist wird. Zur Übertragung der elektrischen Energie von der Batterie 25 zu dem Elektromotor 16 sind drei Versorgungskabel 26 vorgesehen, über die die drei Pole des Elektromotors 16 versorgt werden. Die Versorgungskabel 26 erstrecken sich von der Steuereinheit 24 bis zu einer Steuerplatine 27, die am hinteren Ende 23 des Motorgehäuses 19 angeordnet ist.

Auf der Steuerplatine 27 sind außerdem ein Temperatursensor 28 und ein Drehzahlsensor 29 angeordnet. Zwei Sensorkabel 30 erstrecken sich zwischen den Sensoren 28, 29 und der Steuereinheit 24.

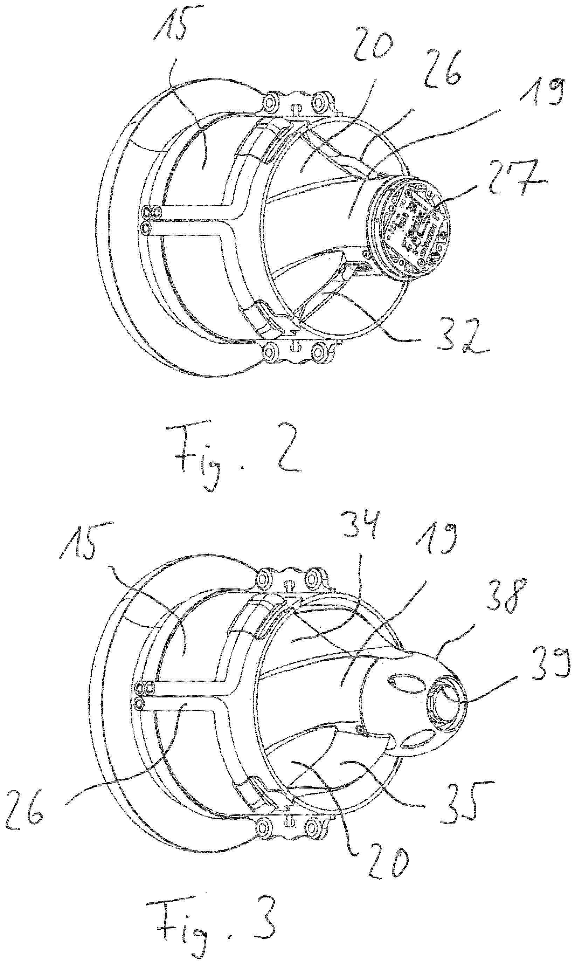

Die Steuereinheit 24 ist radial außerhalb des Impellergehäuses 15 angeordnet. Die Versorgungskabel 26 und die Sensorkabel 30 kreuzen den radialen Abschnitt, in dem der Ringraum 31 ausgebildet ist und in dem die mit dem Propeller 14 angetriebene Luftströmung geführt ist. Die Versorgungskabel 26 und die Sensorkabel 30 sollen so angeordnet sein, dass sie die Luftströmung nicht beeinträchtigen. Gemäß den Fig. 2 und 3 wird dies erreicht, indem wenigstens ein Stator 20 in seinem Inneren mit einem Hohlraum 32 versehen ist, in dem die Kabel 26, 30 geführt sind.

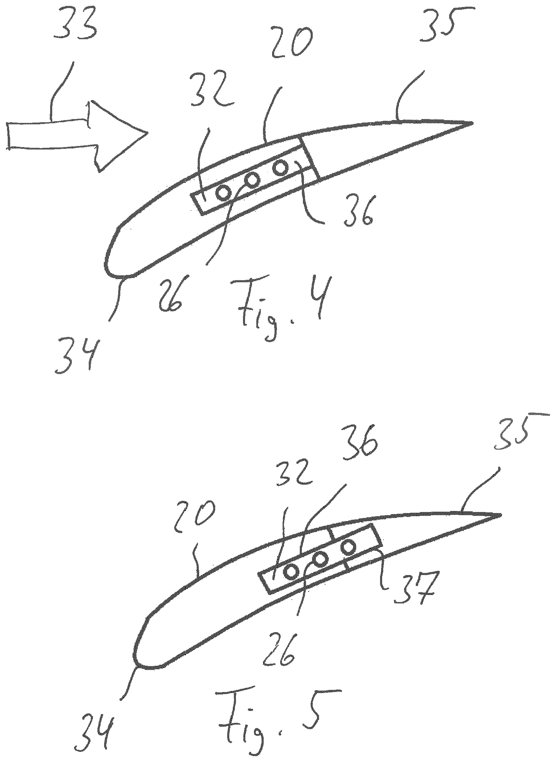

In Fig. 4 ist ein Schnitt in Axialrichtung des Impellers durch einen Stator 20 gezeigt, wobei die Richtung der Luftströmung mit einem Pfeil 33 angedeutet ist. Das Tragflächenprofil des Stators 20 wird von einem Statorkörper 34 und einem Deckel 35 gebildet. Der Deckel 35 schließt an das hintere Ende Statorkörpers 34 an und führt das von dem Statorkörper 34 aufgespannte Profil mit einem glatten Übergang nach hinten fort.

Der Statorkörper 34 hat eine tragende Funktion, indem der Statorkörper 34 Kräfte zwischen dem Impellergehäuse 15 und dem Motorgehäuse 19 überträgt und das Motorgehäuse 19 relativ zu dem Impellergehäuse 15 in Position hält. Der Deckel 35 hat bei der gezeigten Ausführungsform keine tragende Funktion. Von der Erfindung umfasst sind alternative Ausführungsformen, bei denen der Statorkörper 34 und der Deckel 35 gemeinsam die Kraftübertragung zwischen dem Impellergehäuse 15 und dem Motorgehäuse 19 übernehmen.

Am hinteren Ende des Statorkörpers 34 ist eine Ausnehmung 36 ausgebildet, die sich über die gesamte Länge des Stators 20 von dem Motorgehäuse 19 zu dem Impellergehäuse 15 erstreckt. Die Ausnehmung 36 ist durch das Impellergehäuse 15 hindurch nach außen offen und durch das Motorgehäuse 19 hindurch nach innen offen. Im Querschnitt, der in Fig. 4 gezeigt ist, ist die Ausnehmung 36 so bemessen, dass drei Versorgungskabel 26 nebeneinander in der Ausnehmung 36 Platz finden. Der Deckel 35 kann mit seinem vorderen Ende flach auf das hintere Ende des Statorkörpers 35 aufgelegt werden, so dass die Ausnehmung 36 zu einem rundherum abgedeckten Hohlraum 32 abgeschlossen wird.

Bei der alternativen Ausführungsform gemäß Fig. 5 hat auch der Deckel 35 an seinem vorderen Ende eine Ausnehmung 37, so dass der Hohlraum 32 aus der Ausnehmung 36 des Statorkörpers 34 und der Ausnehmung 37 des Deckels 35 zusammengesetzt wird. Die Sensorkabel 30 sind in einem entsprechenden Hohlraum 32 eines zweiten Stators 20 geführt.

Gemäß Fig. 3 ist der Deckel 35 des Stators 20 Element eines einstückigen Deckel-Bauteils 38. Das Deckel-Bauteil 38 umfasst einen zentralen Abschnitt, der in einer abgerundeten Form nach hinten ausläuft. Mit dem zentralen Abschnitt des Deckel-Bauteils 38 wird die Steuerplatine 27 nach hinten abgedeckt.

Von dem zentralen Abschnitt erstrecken die drei Deckel 35 für die Statoren 20 sich radial nach außen. Das Deckel-Bauteil 38 ist in seinem zentralen Abschnitt mit vier über den Umfang verteilten Bohrungen versehen, über die das Deckel-Bauteil 38 mit dem Motorgehäuse 19 verschraubt wird.

Am hinteren Ende seines zentralen Abschnitts ist das Deckel-Bauteil 38 mit einer Eintrittsöffnung 39 eines Lüftungskanals versehen. Der Lüftungskanal erstreckt sich von der Eintrittsöffnung 39 durch den Elektromotor 16 hindurch zu dem Ringraum 31.

Für die Montage des erfindungsgemäßen Impellers werden das Impellergehäuse 15 und das über die Statoren 20 daran angeschlossene Motorgehäuse 19 als einheitliches Bauteil bereitgestellt. Das Motorgehäuse 19 hat in seinem Inneren einen für die Aufnahme des Elektromotor 16 bestimmten Raum. Der Elektromotor 16 mit den drei Versorgungskabeln 26, der Steuerplatine 27 und den Sensorkabeln 30 wird von hinten an das Motorgehäuse 19 herangeführt und in das Motorgehäuse 19 eingeschoben. Beim Einschieben werden die Versorgungskabel 26 in die von hinten zugänglichen Ausnehmungen 36 eines ersten Stators 20 und die Sensorkabel 30 in die von hinten zugänglichen Ausnehmungen 36 eines zweiten Stators 20 eingesetzt. Die Versorgungskabel 26 und die Sensorkabel 30 werden mit Klebstoff in ihrer Position fixiert.

Wenn der Elektromotor 16 seine endgültige Position in dem Motorgehäuse 19 erreicht hat und an einem Anschlag des Motorgehäuses 19 anliegt, wird der Rotor 14 von vorne auf die Welle 17 des Elektromotor 16 aufgesetzt und mit der Welle 17 verschraubt.

Anschließend wird das Deckel-Bauteil 38 von hinten auf das Motorgehäuse 19 aufgesetzt und mit dem Motorgehäuse 19 verschraubt. Mit diesem Schritt werden zugleich die Ausnehmungen 36 der Statoren 20 verschlossen, so dass die Versorgungskabel 26 und die Sensorkabel 30 in einem rundherum abgeschlossenen Hohlraum 32 angeordnet sind. Die radial nach außen über das Impellergehäuse 15 hinausragenden Enden der Kabel 26, 30 können an die Steuereinheit 24 angeschlossen werden.

## Patentansprüche

1. Impeller mit einem Impellergehäuse (15) und einem Motorgehäuse (19), wobei das Motorgehäuse (19) in einem Innenraum des Impellergehäuses (15) angeordnet ist, mit einem Stator (20), der eine Verbindung zwischen dem Impellergehäuse (15) und dem Motorgehäuse (19) bildet, und mit einem Kabel (26, 30), das sich zwischen dem Impellergehäuse (15) und dem Motorgehäuse (19) erstreckt, wobei der Stator (20) einen Statorkörper (34) und einen Deckel (35) umfasst und wobei das Kabel (26, 30) in einem Hohlraum (32) geführt ist, der zwischen dem Statorkörper (34) und dem Deckel (35) angeordnet ist.

2. Impeller nach Anspruch 1, **gekennzeichnet durch** eine Mehrzahl von Statoren (20), die sich zwischen dem Impellergehäuse (15) und dem Motorgehäuse (19) erstrecken.

3. Impeller nach Anspruch 1 oder 2, **dadurch gekennzeichnet, dass** der Hohlraum (32) durch das Impellergehäuse (15) hindurch nach außen offen ist.

4. Impeller nach einem der Ansprüche 1 bis 3, **dadurch gekennzeichnet, dass** der Hohlraum (32) durch das Motorgehäuse (19) hindurch nach innen offen ist.

5. Impeller nach einem der Ansprüche 1 bis 4, **dadurch gekennzeichnet, dass** das Kabel (26, 30) ein erstes Ende aufweist, das radial innerhalb des Motorgehäuses (19) und ein zweites Ende aufweist, das radial außerhalb des Impellergehäuses (15) angeordnet ist.

6. Impeller nach einem der Ansprüche 1 bis 5, **dadurch gekennzeichnet, dass** in dem Statorkörper (34) eine Ausnehmung (36) zum Aufnehmen des Kabels (26, 30) ausgebildet ist.

7. Impeller nach Anspruch 6, **dadurch gekennzeichnet, dass** die Ausnehmung (36) zum hinteren Ende des Statorkörpers (34) hin offen ist.

8. Impeller nach einem der Ansprüche 1 bis 7, **dadurch gekennzeichnet, dass** der Deckel (35) in einer lösbaren Verbindung mit dem Statorkörper (34) steht.

9. Impeller nach einem der Ansprüche 1 bis 8, **dadurch gekennzeichnet, dass** der Statorkörper (34) und der Deckel (35) gemeinsam eine Kontur in Form eines Tragflächenprofils aufspannen.

10. Impeller nach einem der Ansprüche 1 bis 9, **gekennzeichnet durch** ein Deckel-Bauteil (38), in dem der Deckel für einen ersten Statorkörper und der Deckel für einen zweiten Statorkörper zu einem einheitlichen Bauteil zusammengefasst sind.

11. Impeller nach Anspruch 10, **dadurch gekennzeichnet, dass** das Deckel-Bauteil (38) einen zentralen Abschnitt umfasst, der eine Abdeckung für das hintere Ende des Motorgehäuses (19) bildet.

12. Verfahren zum Montieren eines Impellers mit folgenden Schritten:
a. Einsetzen eines Motors (16) in ein Motorgehäuse (19) ;
b. Anordnen eines Kabels (26, 30) entlang eines Statorkörpers (34), wobei der Statorkörper (34) das Motorgehäuse (19) mit einem Impellergehäuse (15) verbindet;
c. Anbringen eines Deckels (35), so dass das Kabel (26, 30) in einem Hohlraum (32) zwischen dem Deckel (35) und dem Statorkörper (34) angeordnet ist.

13. Verfahren nach Anspruch 12, **dadurch gekennzeichnet, dass** ein Rotor (14) mit dem Motor (16) verbunden wird.
